# EUROPÄISCHE PATENTANMELDUNG

(11) **EP 2 724 601 A1**
(43) Veröffentlichungstag der Anmeldung: **30.04.2014**
(21) Anmeldenummer: 13401114.7
(22) Anmeldetag: 21.10.2013
(51) Int. Cl.: A01C 17/00

(54) **Dosiereinrichtung**

(30) Priorität: 25.10.2012 DE 102012110191
(71) Anmelder: Amazonen-Werke H. Dreyer GmbH & Co. KG, 49205 Hasbergen (DE)
(72) Erfinder: Johannaber, Stefan Jan, 49536 Lienen (DE); Lampert, Tobias, 49504 Lotte (DE)

(57) **Zusammenfassung**

Dosiereinrichtung (4) einer einen Vorratsbehälter (3) aufweisenden landwirtschaftlichen Verteilmaschine, insbesondere Schleuderstreuer, wobei die Dosiereinrichtung (4) zumindest eine mit einem verstellbar angeordneten Schieber (12) verschließbare und in ihrer Öffnungsweite einstellbare und im Bodenbereich des Vorratsbehälter (3) angeordnete Auslassöffnung (11) aufweist, wobei der Schieber (12) mittels eines in zwei Einstellrichtungen wirksamen und als doppelwirkender und zumindest eine Kolbenstange (29,30)und ein Kolben und eine Zylinderwand aufweisenden Hydraulikzylinder ausgebildetes Verstellelement in seine jeweilige Schließ- oder Öffnungsstellung bringbar ist und in seiner Öffnungsstellung eine vorbestimmte Position einnimmt und einen vorbestimmten Querschnitt der Auslassöffnung freigibt, wobei zur Vorbestimmung der Öffnungsstellung des Schiebers (12) eine in verschiedene Positionen einstellbarer Mengeneinstelleinrichtung vorgesehen ist, wobei das Verstellelement unmittelbar zwischen dem Schieber (12) und der Mengeneinstelleinrichtung angeordnet ist. Um einen Hydraulikzylinder mit einer gleichmäßig beaufschlagenden Kraft auf beiden Kolbenflächen zu erzeugen und dabei die maximale Hubkraft eines doppelwirkenden Standardzylinders gewollt zu reduzieren, ist vorgesehen, dass der Hydraulikzylinder als hydraulischer Gleichlaufzylinder ausgebildet ist.

## Beschreibung

Die Erfindung betrifft eine Dosiereinrichtung gemäß dem Oberbegriff des Anspruches 1.

Derartige Dosiereinrichtungen für als Schleuderstreuer ausgebildete Verteilmaschinen sind beispielsweise durch die DE 10 2010 036 308 A1 bekannt. Diese Dosiereinrichtungen sind unterhalb der Auslauftrichter der Vorratsbehälter dieser landwirtschaftlichen Verteilmaschinen angeordnet. Diese Dosiereinrichtungen weisen einen mit einer Durchlassöffnung ausgestatteten Boden auf. Die Öffnungsweite der Durchlassöffnung ist mittels eines zugeordneten Schiebers zu verschließen und in ihrer Öffnungsweise einzustellen. Hierzu sind an dem Schieber in zwei Einstellrichtungen doppeltwirkende Hydraulikzylinder angeordnet, um den Schieber jeweils in Schließ- oder Öffnungsstellung zu bringen. Die Öffnungsstellung wird mittels einer einstellbaren Mengeneinstelleinrichtung bestimmt.

Durch den Einsatz eines doppeltwirkenden Zylinders wird auf der einen Seite des Kolbens eine höhere Kraft erzeugt, und zwar auf der Kolbenseite, welche der am Kolben angebundenen Kolbenstange abgewandt ist. Aufgrund der unterschiedlichen Kolbenflächen besteht eine Differenz zwischen erzeugter Hubkraft und Hubgeschwindigkeit. Zur Verstellung des Schiebers der Mengeneinstelleinrichtung, ist die höhere Kraft beim Ausfahren des Zylinders nicht erforderlich. Auf diese höhere Kraft müssen die Bauteile der Dosiereinrichtung ausgelegt sein; dies führt zu unnötig teuren und/oder aufwendigen Bauteilen.

Der Erfindung liegt die Aufgabe zugrunde, einen Hydraulikzylinder mit einer gleichgroßen beaufschlagenden Kraft auf beiden Kolbenflächen zu schaffen und dabei die maximale Hubkraft eines doppelwirkenden Standardzylinders zu reduzieren.

Diese Aufgabe wird erfindungsgemäß dadurch gelöst, dass das Verstellelement als Gleichlaufzylinder zwischen Schieber und der Mengeneinstelleinrichtung ausgebildet ist. Hierbei ist der Gleichlaufzylinder so ausgestaltet, dass durch die querschnittsgleichen Kolbenstangen auf beiden Seiten des Kolbens eine identische Ringfläche erzeugt wird, die eine gleichmäßige Kraft- und Geschwindigkeitsverteilung bei jeder Kolbenbewegung gestattet. Die erzeugbaren Stellkräfte sind so in gewollter Weise reduziert. Hierdurch können die Bauteile der Dosiereinrichtung vereinfacht und leichter ausgestaltet werden.

Eine einfache Ausbildung des Gleichlaufzylinders zur Verstellung der Dosiereinrichtung ergibt sich dadurch, dass die Kolbenstange aus zwei mittels eines Verbindungselementes miteinander verbundenen Halbstangen besteht, dass der Kolben des Zylinders annähernd mittig zwischen den zwei zumindest annähernd gleichlangen Halbstangen im Bereich des Verbindungselements der miteinander verbundenen Halbstangen der Kolbenstange angebracht ist.

Um den Kolben in der Mitte der beiden Kolbenstangen in einfacher Weise zu fixieren, ist vorgesehen, dass das die beiden Kolbenstangen miteinander verbindende Verbindungselement als Schraubverbindung ausgebildet ist. Dazu ist in dem einen Ende der einander benachbarten Kolbenstangenbereiche eine Bohrung mit einem Innengewinde und in das andere Ende der einander benachbarten Kolbenstange ein Bolzenstück mit einem Außengewinde angeordnet ist, so dass der Bolzen mit seinem Außengewinde in die Bohrung mit dem Innengewinde einschraubbar ist und eine der Kolbenstange in dem einander benachbarten Bereich einem gegenüber im übrigen Kolbenstangenbereich verringerten Durchmesser aufweist, dem auf diesem im Durchmesser verringerten Bereich der Kolben auf der Kolbenstange angeordnet ist.

Eine vorteilhafte Ausgestaltung des Kolbens zur Reduzierung der Hubkraft wird dadurch erreicht, dass der Kolben zur Zylinderwand einen geringfügigen umlaufenden Spalt von kleiner als 0,1mm, vorzugsweise kleiner als 0,05mm aufweist und dass die Kolbenringfläche ohne zusätzlichen Dichtring die Dichtfläche zur Zylinderwand bildet, um eine Überströmung des Fluides zu ermöglichen und dadurch die Hubkraft zu minimieren. Eine solche vereinfachte Ausgestaltung des Kolbens, bewirkt geringe Anforderungen an die Oberfläche der Zylinderinnenwand und zudem einen Wegfall von Kolbendichtringen.

Eine vorteilhafte identische Ausbildung der Stirnseiten, welche den Zylinder beidseits verschließen und durch die Kolbenstange hindurchgeführt sind, ermöglicht eine preisgünstige Fertigung.

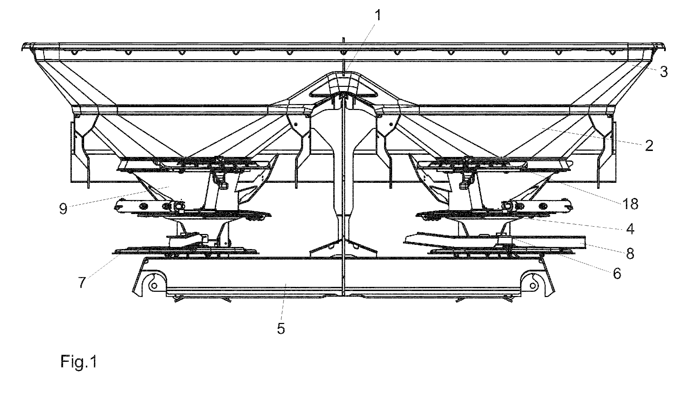

Weitere Einzelheiten der Erfindung sind der Beispielsbeschreibung und den Zeichnungen zu entnehmen. Hierbei zeigen
- Fig. 1: den Schleuderstreuer in der Ansicht von hinten und in Prinzipdarstellung,

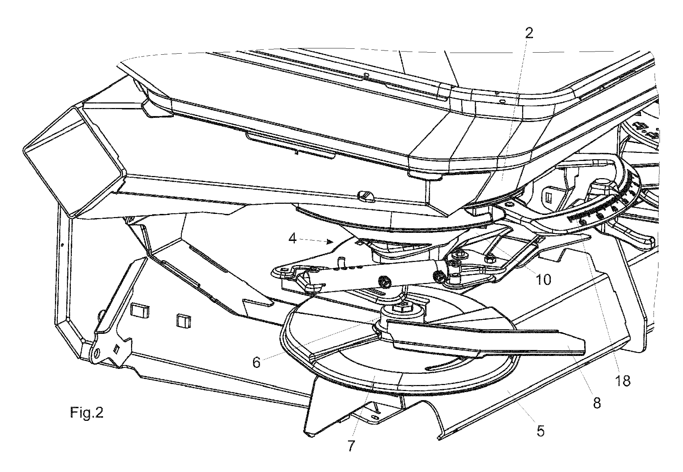

- Fig. 2: den in Fahrtrichtung gesehen linken Bereich des Streuers in perspektivischer Darstellung und in vergrößertem Maßstab,
- Fig. 3: der Boden mit Auslauföffnung und Schieber der Dosiereinrichtung mit Mengeneinstellung "0" und ausgefahrenem Einstellelement in der Draufsicht,
- Fig. 4: der Boden mit Auslauföffnung und Schieber der Dosiereinrichtung mit Mengeneinstellung "0" und eingefahrenem Einstellelement in der Draufsicht,
- Fig. 5: der Boden mit Auslauföffnung und Schieber der Dosiereinrichtung mit Mengeneinstellung "31" und eingefahrenem Einstellelement in der Draufsicht,
- Fig. 6: der Boden mit Auslauföffnung und Schieber der Dosiereinrichtung mit Mengeneinstellung "31" und ausgefahrenem Einstellelement in der Draufsicht,

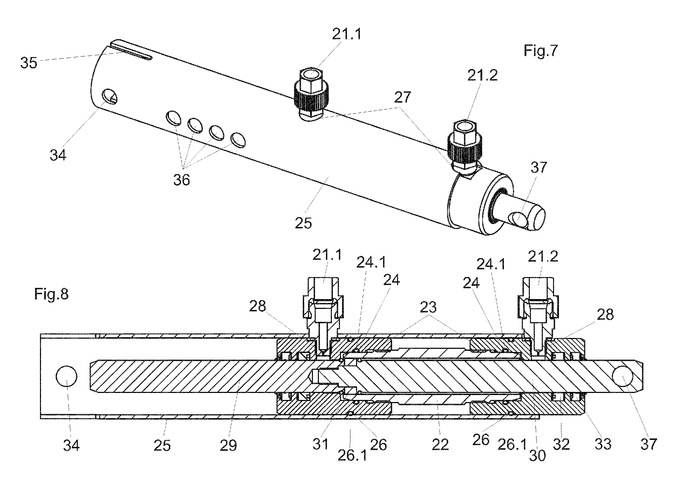

- Fig. 7: den Gleichlaufzylinder mit Schutzrohr in perspektivischer Ansicht und
- Fig. 8: den Gleichlaufzylinder mit Schutzrohr in Schnittansicht.

Die als Zweischeibendüngerstreuer ausgebildete Verteilmaschine weist den durch ein dachförmiges Mittelteil 1 in seinem unteren Bereich in zwei Auslauftrichter 2 aufgeteilten Vorratsbehälter 3 auf. Der Vorratsbehälter 3 ist mit einem nicht dargestellten Rahmen versehen, über den der Schleuderdüngerstreuer an den Dreipunktkraftheber eines Ackerschleppers anzuordnen ist. An den unteren Enden der Auslauftrichter 2 ist jeweils eine Dosiereinrichtung 4 angeordnet. Unterhalb der Dosiereinrichtung 4 sind auf aus einem Getriebeblock 5, der an dem nicht dargestellten Rahmen angeordnet ist, herausragenden und rotierend antreibbaren Wellen 6 Schleuderscheiben 7 mit darauf angeordneten Wurfelementen 8 angeordnet. Die Schleuderscheiben 7 rotieren in bekannter Weise ineinander entgegengesetztem Drehsinn.

Die jeweilige Dosiereinrichtung 4 weist ein topfförmiges Trichterelement 9 auf, in dessen Boden 10 zumindest eine als Auslassöffnung 11 ausgebildete Durchlassöffnung angeordnet ist. Die Auslassöffnung 11 wirkt mit einem Schieber 12 zusammen. Über den Schieber 12, der unterhalb des Bodens 10 des bodenförmigen Bereiches des Trichterelementes 9 der Dosiereinrichtung 4 angeordnet ist, ist die Auslassöffnung 11 verschließbar und in ihrer Öffnungsweise einstellbar. Der Schieber 12 ist an einem an dem Boden 10 der Dosiereinrichtung 4 in der Schwenkhülse 13 gelagerten Schwenkbolzen 14 verschwenkbar gegenüber der Durchlassöffnung 11 angeordnet.

Der Schieber 12 ist mittels eines als hydraulischer Gleichlaufzylinder 15 ausgebildeten Verstellelementes um die durch den Schwenkbolzen 14 verlaufende Schwenkachse in seine jeweilige Schließ- oder Öffnungsstellung zu verschwenken. Auf dem Schwenkbolzen 14 ist weiterhin der Schwenkhebel 15 der Mengeneinstelleinrichtung 16 verschwenkbar gelagert. Der Schwenkhebel 17 ist somit auf dem Schwenkbolzen 14, auf dem der Schieber 12 verschwenkbar angeordnet ist, gelagert. Der Schwenkhebel 17 ist an der an dem Vorratsbehälter 3 angeordneten Einstellskala 18 mittels der geeigneten Festsetzelementen 19 in der jeweils gewünschten Position festzusetzen.

Der hydraulische Gleichlaufzylinder 15 ist einerseits an dem Schieber 12 und andererseits an dem Schwenkhebel 17 mittels Verbindungselementen 20.1 und 20.2 befestigt. Somit ist das als hydraulischer Gleichlaufzylinder 15 ausgebildete Verstellelement unmittelbar zwischen dem Schieber 12 und dem Schwenkhebel 17 der Mengeneinstelleinrichtung 16. Die beiden Anschlüsse 21.1 und 21.2 des hydraulischen Gleichlaufzylinders 15 sind in nicht dargestellter Weise über Hydraulikleitungen an eine Hydraulikanlage, beispielsweise die des den Schleuderstreuer tragenden Ackerschleppers, in bekannter Weise angeschlossen.

Das als hydraulischer Gleichlaufzylinder 15 ausgebildete Verstellelement weist das Zylinderrohr 22 auf, das an seinen Enden mit jeweils identischen ausgestalteten Zylinderköpfen 23 abdichtend verschraubt ist. Die Zylinderköpfe 23 weisen eine innenliegende Ringnut 24 mit O-Ring 24.1 auf, welche vor der Verschraubung die Zylinderköpfe 23 und das Zylinderrohr 22 zueinander abdichtet. Über das Zylinderrohr 22 und die Zylinderköpfe 23 ist ein zumindest über die eine Kolbenlänge hinausragendes Schutzrohr 25 angeordnet. Das außenliegende Schutzrohr 25 schützt das aus Zylinderrohr 22 und Zylinderköpfen 23 bestehende Zylindergehäuse vor chemischen äußeren Einflüssen. Die in der Ringnut 26 angeordnete des jeweiligen Zylinderkopfes 23 gesonderte O-Ring 26.1 dichtet den Zylinder gegen das Schutzrohr 25 ab. Das Schutzrohr 25 ist jeweils im mittleren Bereich und an dem Ende des hervorstehenden Zylinderkopfes 23 mit einer Aussparung 27 versehen, damit die Hydraulikanschlüsse 21.1 und 21.2 des Schutzrohres 25 durchdringen können und so in die in den Zylinderköpfen 23 eingebrachten Gewindebohrung 28 befestigen und fixieren zu können.

Durch die zuvor erwähnten Hydraulikanschlüsse 21.1 und 21.2 gelangt Hydrauliköl über die Zylinderköpfe 23 in das Zylinderrohr 22. Bei abwechselnder Druckbeaufschlagung verfahren die zwei ineinander verschraubten Kolbenstangen 29 und 30, dessen Wirkfläche den mittig angeordneten Kolbenring 31 zwischen den beiden verbundenen Kolbenstangen 29 und 30 ausbildet, in die gegenüberliegende Stellung des jeweilig angesteuerten Hydraulikanschlusses. Das Hydrauliköl kann über den minimalen Spalt zwischen dem Zylinderrohr 22 und der Mantelfläche des Kolbenringes 31 bei dem Verfahren des Kolbenringes 31 mit den Kolbenstangen 29 und 30 in Verstellung der Dosiereinrichtung 4 in den drucklosen Bereich des Gleichlaufzylinders 15 überströmen um somit einen gewünschten Druckverlust zu erhalten. Eine Führung der Kolbenstangen 29 und 30 erfolgt durch die Zylinderköpfe 23, welche gegen austretendes Hydrauliköl mit jeweiliger Ringnut mit Führungsring 32, welcher als Abdichtung ausgestaltet ist und Ringnut mit Abstreifer 33 ausgeführt sind. Das Schutzrohr 25 weist am Ende der in eingefahrener Position herausragenden Kolbenstange 29 eine Bohrung 34 und ein im Winkel von 90° versetztes, gegenüberliegende offene Langlöcher 35 zur Befestigung am Schwenkhebel 17 auf. Somit ist die Befestigungsvorrichtung 34 und 35 an dem Endbereich des Schutzrohres 25 angeordnet, wobei die Bohrung 34 sich hinter der maximal ausgefahrenen Position der Kolbenstange 29 befindet. Somit ist die dem Zylindergehäuse zugeordneten Befestigungsvorrichtung 34, 37 an dem Schutzrohr angeordnet. Die Kolbenstange 29 wird zusätzlich durch das Schutzrohr 25 von äußeren Einflüssen geschützt.

Auf gleicher Ebene der Bohrung sind zusätzlich noch vier Durchbrüche 36 angebracht, über die Verunreinigung aus dem Schutzrohr 25 abgeführt werden.

Die am Ende der aus dem Gleichlaufzylinder 15 austretenden Kolbenstange 28 befindliche Bohrung 37, ist als Bindeglied mit dem Schieber 12 ausgestaltet.
Durch den in verschiedenen Positionen festsetzbaren Schwenkhebel 17 der Mengeneinstelleinrichtung 16 nimmt der Schieber 12 in seiner Öffnungsstellung, in welcher er einen vorbestimmten Querschnitt 38 der Auslassöffnung 11 freigibt, jeweils eine vorbestimmte Position ein.

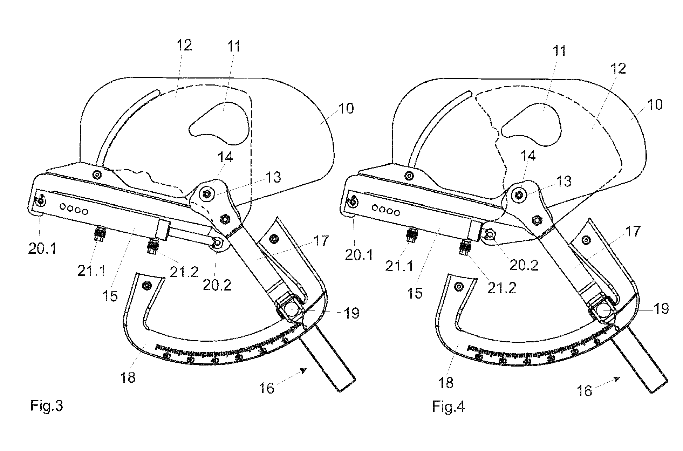

Der Schieber 12 weist eine Ausdehnung auf, die sich zumindest über den doppelten Öffnungswinkel der Auslassöffnung 11 erstreckt, wie beispielsweise der Fig. 3 zu entnehmen ist.

Die Funktionsweise ist folgende:
Gemäß der Fig. 3 ist der Schwenkhebel 17 in die Position "0" eingestellt. Weiterhin ist der hydraulische Gleichlaufzylinder 15 ausgefahren, dies bedeutet, dass der Schieber 12 die Auslassöffnung 11 völlig abdeckt, so dass kein Material der Schleuderscheibe 7 zugeführt wird. Wenn der Schieber 12 nun bei der eingestellten Position "0" für den Schwenkhebel 17 der Mengeneinstelleinrichtung 16 eingefahren wird, das heißt, der Schieber 12 wird an sich in seine Öffnungsposition geschwenkt, so deckt der Schieber 12 aufgrund seiner großen Ausdehnung und erfinderischen Ausgestaltung der Mengeneinstelleinrichtung 16, wie der Fig. 4 zu entnehmen ist, immer noch die Auslassöffnung 11 vollständig ab, so dass entsprechend der Einstellung des Schwenkhebels 17 auf der Position "0" kein Material der Schleuderscheibe 7 zugeleitet wird.

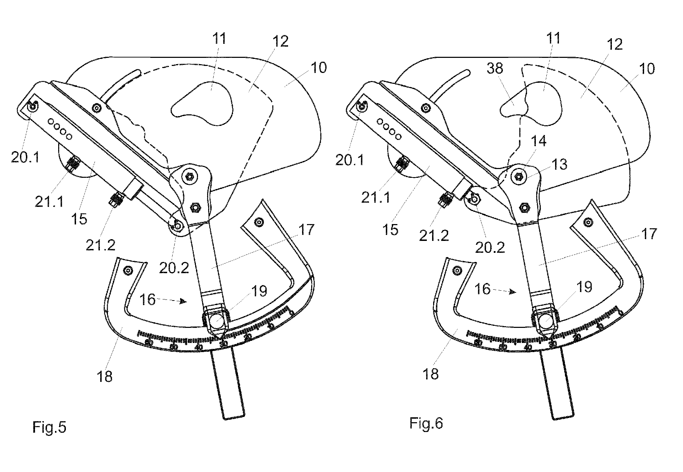

Wenn jedoch der Schwenkhebel 17 der Mengeneinstelleinrichtung 16 auf eine Position größerer "0", beispielsweise wie in Fig. 5 und 6 auf Position "31" eingestellt wird, so deckt der Schieber bei ausgefahrenem hydraulischen Gleichlaufzylinder 15, das heißt in seiner Schließposition die Auslassöffnung 11 vollständig ab, jedoch wenn der hydraulische Gleichlaufzylinder 15 voll eingefahren wird, gibt der Schieber 12 jetzt den gewünschten Querschnitt 38 der Auslassöffnung 11 frei. Durch den freigegebenen Querschnitt 38 der Auslassöffnung 11 wird dann Material in entsprechender Menge der Schleuderscheibe 7 zugeleitet.

Diese erfindungsgemäße Mengeneinstelleinrichtung 16 zeichnet sich dadurch aus, dass sie von dem motorischen Einstellelement, welches von dem hydraulischen Gleichlaufzylinders 15 gebildet wird, keine Kräfte in Teile der Mengeneinstell- 16 und/oder Dosiereinrichtung 4 überträgt, sondern sämtliche Kräfte die entstehen, von dem hydraulischen Gleichlaufzylinder 15 selbst bzw. dessen Bauteilen aufgenommen werden. Der Hydraulikzylinder selbst wird jeweils auf "Anschlag" gefahren.

## Patentansprüche

1. Dosiereinrichtung einer einen Vorratsbehälter aufweisenden landwirtschaftlichen Verteilmaschine, insbesondere Schleuderstreuer, wobei die Dosiereinrichtung zumindest eine mit einem verstellbar angeordneten Schieber verschließbare und in ihrer Öffnungsweite einstellbare und im Bodenbereich des Vorratsbehälter angeordnete Auslassöffnung aufweist, wobei der Schieber mittels eines in zwei Einstellrichtungen wirksamen und als doppelwirkender und zumindest eine Kolbenstange und ein Kolben und eine Zylinderwand aufweisenden Hydraulikzylinder ausgebildetes Verstellelement in seine jeweilige Schließ- oder Öffnungsstellung bringbar ist und in seiner Öffnungsstellung eine vorbestimmte Position einnimmt und einen vorbestimmten Querschnitt der Auslassöffnung freigibt, wobei zur Vorbestimmung der Öffnungsstellung des Schiebers eine in verschiedene Positionen einstellbarer Mengeneinstelleinrichtung vorgesehen ist, wobei das Verstellelement unmittelbar zwischen dem Schieber und der Mengeneinstelleinrichtung angeordnet ist, **dadurch gekennzeichnet, dass** der Hydraulikzylinder als hydraulischer Gleichlaufzylinder ausgebildet ist.

2. Dosiereinrichtung nach Anspruch 1, **dadurch gekennzeichnet, dass** die Kolbenstange aus zwei mittels eines Verbindungselementes miteinander verbundenen Halbstangen besteht, dass der Kolben des Zylinders annähernd mittig zwischen den zwei zumindest annähernd gleichlangen Halbstangen im Bereich des Verbindungselements der miteinander verbundenen Halbstangen der Kolbenstange angebracht ist.

3. Dosiereinrichtung nach zumindest einem der vorstehenden Ansprüche, **dadurch gekennzeichnet, dass** das die beiden Kolbenstangen miteinander verbindende Verbindungselement als Schraubverbindung ausgebildet ist.

4. Dosiereinrichtung nach zumindest einem der vorstehenden Ansprüche, **dadurch gekennzeichnet, dass** in dem einen Ende der einander benachbarten Kolbenstangenbereiche eine Bohrung mit einem Innengewinde und in das andere Ende der einander benachbarten Kolbenstange ein Bolzenstück mit einem Außengewinde angeordnet ist, dass der Bolzen mit seinem Außengewinde in die Bohrung mit dem Innengewinde einschraubbar ist.

5. Dosiereinrichtung nach zumindest einem der vorstehenden Ansprüche, **dadurch gekennzeichnet, dass** zumindest eine der Kolbenstange in dem einander benachbarten Bereich einem gegenüber im übrigen Kolbenstangenbereich verringerten Durchmesser aufweist, dem auf diesem im Durchmesser verringerten Bereich der Kolben auf der Kolbenstange angeordnet ist.

6. Dosiereinrichtung nach zumindest einem der vorstehenden Ansprüche, **dadurch gekennzeichnet, dass** der Kolben zur Zylinderwand einen geringfügigen umlaufenden Spalt von kleiner als 0,1mm, vorzugsweise kleiner als 0,05mm aufweist.

7. Dosiereinrichtung nach zumindest einem der vorstehenden Ansprüche, dass der Kolben keinen Dichtring aufweist.

8. Dosiereinrichtung nach zumindest einem der vorstehenden Ansprüche, dass die Kolbenringfläche ohne zusätzlichen Dichtring die Dichtfläche zur Zylinderwand bildet.

9. Dosiereinrichtung nach zumindest einem der vorstehenden Ansprüche, **dadurch gekennzeichnet, dass** die Stirnseiten, welche den Zylinder beidseits verschließen und durch die Kolbenstange hindurchgeführt sind, identisch ausgestaltet ist.
